# EUROPEAN PATENT APPLICATION

(11) **EP 4 752 060 A1**
(43) Date of publication of application: **03.06.2026**
(21) Application number: 25217832.2
(22) Date of filing: 21.11.2025
(51) Int. Cl.: B64D 17/80, B64U 50/19, B64U 50/30, B64U 70/83

(54) **CONTROL METHOD BASED ON UNMANNED AERIAL VEHICLE SYSTEM AND UNMANNED AERIAL VEHICLE SYSTEM**

(30) Priority: 02.12.2024 CN 202411758257
(71) Applicant: Autel Robotics Co., Ltd., Shenzhen, Guangdong 518055 (CN)
(72) Inventor: SONG, Jianping, Shenzhen, Guangdong, 518055 (CN); LIU, Hong, Shenzhen, Guangdong, 518055 (CN)
(74) Representative: Gulde & Partner

(57) **Abstract**

The present disclosure discloses a control method based on an unmanned aerial vehicle system and an unmanned aerial vehicle system. The unmanned aerial vehicle system includes an unmanned aerial vehicle, a remote controller, a second control apparatus and a first control apparatus. The second control apparatus is disposed on the unmanned aerial vehicle. The first control apparatus is disposed on the remote controller. The unmanned aerial vehicle includes a first battery. The control method based on the unmanned aerial vehicle system includes: The first control apparatus outputs a first control signal. The second control apparatus receives the first control signal, and outputs a second control signal to the first battery when receiving the first control signal. The first battery stops outputting voltage when receiving the second control signal. This approach reduces the risk of UAV damage and effectively enhances flight safety.

## Description

### TECHNICAL FIELD

Embodiments of the present disclosure relate to the field of unmanned aerial vehicle control technologies, and in particular, to a control method based on an unmanned aerial vehicle system and an unmanned aerial vehicle system.

### BACKGROUND

With the vigorous development of low altitude economies, unmanned aerial vehicles are widely used in various industries. Problems of flight safety of the unmanned aerial vehicles are increasingly prominent, for example, collisions of the unmanned aerial vehicles with obstacles and sudden crashes and explosion of the unmanned aerial vehicles frequently occur. Although an emergency propeller stop function is usually provided for an existing unmanned aerial vehicle, there is still a risk that the unmanned aerial vehicle is damaged when an emergency occurs or flight control fails.

### SUMMARY

Embodiments of the present disclosure provide a control method based on an unmanned aerial vehicle system and an unmanned aerial vehicle system, to reduce a risk that an unmanned aerial vehicle is damaged, and effectively improve flight safety of the unmanned aerial vehicle.

According to a first aspect, an embodiment of the present disclosure provides a control method based on the unmanned aerial vehicle system. The unmanned aerial vehicle system includes an unmanned aerial vehicle, a remote controller, a first control apparatus and a second control apparatus. The second control apparatus is disposed on the unmanned aerial vehicle. The first control apparatus is disposed on the remote controller. The unmanned aerial vehicle includes a first battery. The method includes: The first control apparatus outputs a first control signal. The second control apparatus receives the first control signal, and outputs a second control signal to the first battery when receiving the first control signal. The first battery stops outputting voltage when receiving the second control signal.

In one or more embodiments, the unmanned aerial vehicle system further includes a parachute disposed on the unmanned aerial vehicle. The unmanned aerial vehicle further includes a first controller and a sensor. After the first battery stops outputting the voltage when receiving the second control signal, the method further includes: The first controller controls to open the parachute when receiving a detection signal, the detection signal being outputted by the sensor when the sensor detects that the unmanned aerial vehicle falls.

In one or more embodiments, the first control apparatus further includes N keys, N being an integer greater than or equal to 1. That the first control apparatus outputs the first control signal includes: The first control apparatus outputs the first control signal when M keys of the N keys are pressed, M being an integer greater than or equal to 1 and less than or equal to N.

In one or more embodiments, before the first control apparatus outputs the first control signal, the method further includes: The first control apparatus sends a first determining signal to the second control apparatus, to enable the second control apparatus to determine that the second control apparatus is already connected to the first control apparatus; and the second control apparatus sends a second determining signal to the first control apparatus, to enable the first control apparatus to determine that the first control apparatus is already connected to the second control apparatus.

According to a second aspect, an embodiment of the present disclosure provides an unmanned aerial vehicle system, including: an unmanned aerial vehicle, a remote controller, a second control apparatus and a first control apparatus. The second control apparatus is disposed on the unmanned aerial vehicle. The first control apparatus is disposed on the remote controller. The unmanned aerial vehicle includes a first battery. The first battery is electrically connected to the second control apparatus. The first control apparatus is configured to output a first control signal. The second control apparatus is configured to receive the first control signal, and configured to output a second control signal to the first battery when receiving the first control signal. The first battery is configured to stop outputting voltage when receiving the second control signal.

In one or more embodiments, the unmanned aerial vehicle system further includes a parachute. The unmanned aerial vehicle further includes a first controller and a sensor. The first controller is separately electrically connected to the sensor and the parachute. The first controller is configured to control to open the parachute when receiving a detection signal, the detection signal being outputted by the sensor when the sensor detects that the unmanned aerial vehicle falls.

In one or more embodiments, the sensor includes an acceleration sensor.

In one or more embodiments, the first control apparatus further includes N keys, N being an integer greater than or equal to 1. The first control apparatus is further configured to output the first control signal when M keys of the N keys are pressed, M being an integer greater than or equal to 1 and less than or equal to N.

In one or more embodiments, the first control apparatus is further configured to send a first determining signal to the second control apparatus, to enable the second control apparatus to determine that the second control apparatus is already connected to the first control apparatus. The second control apparatus is further configured to send a second determining signal to the first control apparatus, to enable the first control apparatus to determine that the first control apparatus is already connected to the second control apparatus.

In one or more embodiments, the first control apparatus includes a first communication module and a first housing. The second control apparatus includes a second communication module and a second housing. The first communication module is disposed inside the first housing, and the first communication module includes a second controller, a first antenna and a second battery, the second controller being electrically connected to the first antenna. The second communication module is disposed inside the second housing, and the second communication module includes a third controller, a second antenna and a third battery, the third controller being electrically connected to the second antenna.

Beneficial effects of the present disclosure are as follows: According to the control method based on the unmanned aerial vehicle system in the embodiments of the present disclosure, the first control apparatus may output the first control signal to the second control apparatus when an emergency occurs or flight control fails, so that the second control apparatus outputs the second control signal to the first battery. Further, the first battery stops outputting the voltage when receiving the second control signal, and the unmanned aerial vehicle stops operating because power supply is lost. Therefore, it is beneficial to reducing a risk that the unmanned aerial vehicle is damaged, thereby effectively improving flight safety of the unmanned aerial vehicle.

### BRIEF DESCRIPTION OF THE DRAWINGS

One or more embodiments are exemplarily described by using figures in the accompanying drawings corresponding thereto. These exemplary descriptions are not to be construed as limiting the embodiments. In the accompanying drawings, elements having a same reference numeral are represented as similar elements.
FIG. 1 is a schematic diagram of a structure of an unmanned aerial vehicle system according to an embodiment of the present disclosure;
FIG. 2 is a schematic component block diagram 1 of an unmanned aerial vehicle system according to an embodiment of the present disclosure;
FIG. 3 is a schematic component block diagram 2 of an unmanned aerial vehicle system according to an embodiment of the present disclosure;
FIG. 4 is a schematic component block diagram 3 of an unmanned aerial vehicle system according to an embodiment of the present disclosure;
FIG. 5 is a schematic component block diagram 4 of an unmanned aerial vehicle system according to an embodiment of the present disclosure;
FIG. 6 is a flowchart 1 of a control method based on an unmanned aerial vehicle system according to an embodiment of the present disclosure; and
FIG. 7 is a flowchart 2 of a control method based on an unmanned aerial vehicle system according to an embodiment of the present disclosure.

### DETAILED DESCRIPTION

To make the objectives, technical solutions, and advantages of embodiments of the present disclosure clearer, the technical solutions in the embodiments of the present application will be clearly and described in detail below with reference to the accompanying drawings in the embodiments of the present disclosure. It is clear that the described embodiments are merely a part of the embodiments of the present disclosure, rather than all of the embodiments. It should be understood that the specific embodiments described herein are merely for explaining the present disclosure, but are not intended to limit the present disclosure.

It should be noted that, when an element is described as being "connected to" another element, the element may be directly connected to the another element, or one or more intermediate elements may exist between the elements.

In addition, provided that there is no construction conflict between the technical features involved various embodiments of the present disclosure described below, the technical features may be combined with each other.

Currently, an emergency propeller stop function is usually provided for an existing unmanned aerial vehicle. However, when an emergency occurs (for example, the unmanned aerial vehicle may collide with an obstacle due to an equipment fault such as a misjudgment of a sensor on the unmanned aerial vehicle) or flight control fails (for example, the unmanned aerial vehicle is uncontrolled due to a reason such as a power failure, a software error or hardware damage), there is still a risk that the unmanned aerial vehicle is damaged.

Based on the above, an embodiment of the present disclosure provides an unmanned aerial vehicle system. The unmanned aerial vehicle system can control to stop operation of the unmanned aerial vehicle when an emergency occurs or flight control fails, to reduce a risk that the unmanned aerial vehicle is damaged.

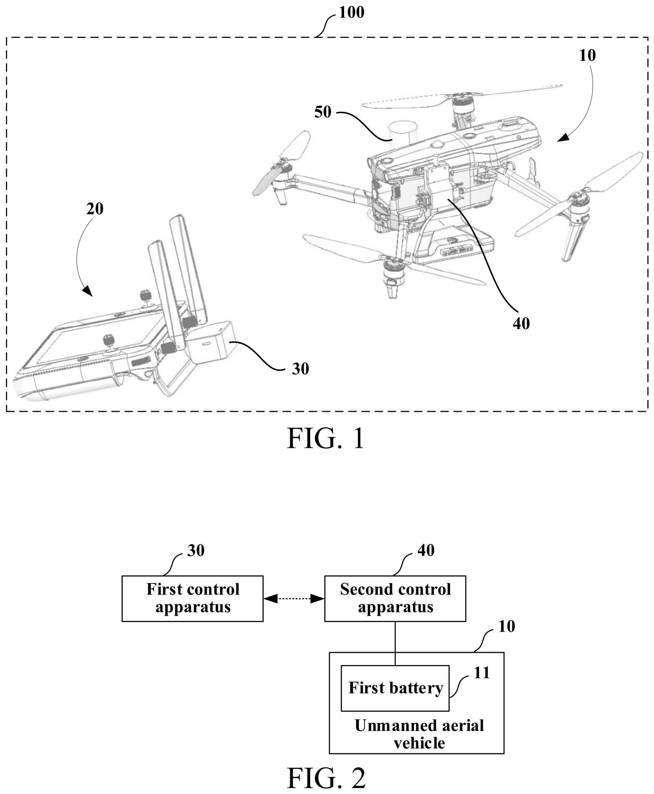

With reference to FIG. 1 and FIG. 2, FIG. 1 is a schematic diagram of a structure of an unmanned aerial vehicle system according to an embodiment of the present disclosure; and FIG. 2 is a schematic component block diagram of an unmanned aerial vehicle system according to an embodiment of the present disclosure. As shown in FIG. 1 and FIG. 2, an unmanned aerial vehicle system 100 includes an unmanned aerial vehicle 10, a remote controller 20, a first control apparatus 30 and a second control apparatus 40. The first control apparatus 30 is disposed on the remote controller 20. The second control apparatus 40 is disposed on the unmanned aerial vehicle 10.

A full name of the unmanned aerial vehicle 10 is an unmanned aerial vehicle. In this embodiment of the present disclosure, the unmanned aerial vehicle 10 is an unmanned aircraft controlled by using a radio remote-control device (that is, the remote controller 20). The unmanned aerial vehicle 10 includes a first battery 11. The first battery 11 is electrically connected to the second control apparatus 40 (by using a control line). In this embodiment of the present disclosure, batteries (including the first battery 11, and a second battery 313 and a third battery 413 that are in subsequent embodiments) each may be a lithium-ion battery, a lithium-metal battery, a lead-acid battery, a nickel-cadmium battery, a nickel-hydrogen battery, a lithium-sulfur battery, a lithium-air battery, a sodium-ion battery or the like, and is not limited herein. In terms of a scale, the batteries each may be a cell body, a battery module formed by connecting a plurality of cell bodies in series and/or in parallel, a battery pack formed by connecting a plurality of battery modules in series and/or in parallel or a power supply unit formed by connecting a plurality of battery packs in parallel, and is not limited herein. The remote controller 20 is a tool for operating the unmanned aerial vehicle 10 from a long distance, and sends an instruction by using a radio signal or an infrared signal.

The first control apparatus 30 is an apparatus that is mounted on the remote controller 20 and is independent of the remote controller 20 during operation. The second control apparatus 40 is an apparatus that is mounted on the unmanned aerial vehicle 10 and is independent of the unmanned aerial vehicle 10 during operation. The first control apparatus 30 communicates with the second control apparatus 40, so that data transmission can be implemented between the first control apparatus 30 and the second control apparatus 40.

Specifically, the first control apparatus 30 is configured to output a first control signal. The second control apparatus 40 is configured to receive the first control signal, and configured to output a second control signal to the first battery 11 when receiving the first control signal. The first battery 11 is configured to stop outputting voltage when receiving the second control signal. During actual application, the first control apparatus 30 may output the first control signal to the second control apparatus 40 when an emergency occurs or flight control fails, so that the second control apparatus 40 outputs the second control signal to the first battery. Further, the first battery 11 stops outputting the voltage when receiving the second control signal, and the unmanned aerial vehicle 10 stops operating because power supply is lost (where in this case, a motor for controlling a propeller in the unmanned aerial vehicle 10 stops operating, so that the propeller stops rotating). Therefore, a risk such as collision with an obstacle due to maintaining operating by the unmanned aerial vehicle 10 when the emergency occurs or the flight control fails is avoided. In other words, a risk that the unmanned aerial vehicle 10 is damaged can be reduced, thereby effectively improving flight safety of the unmanned aerial vehicle 10.

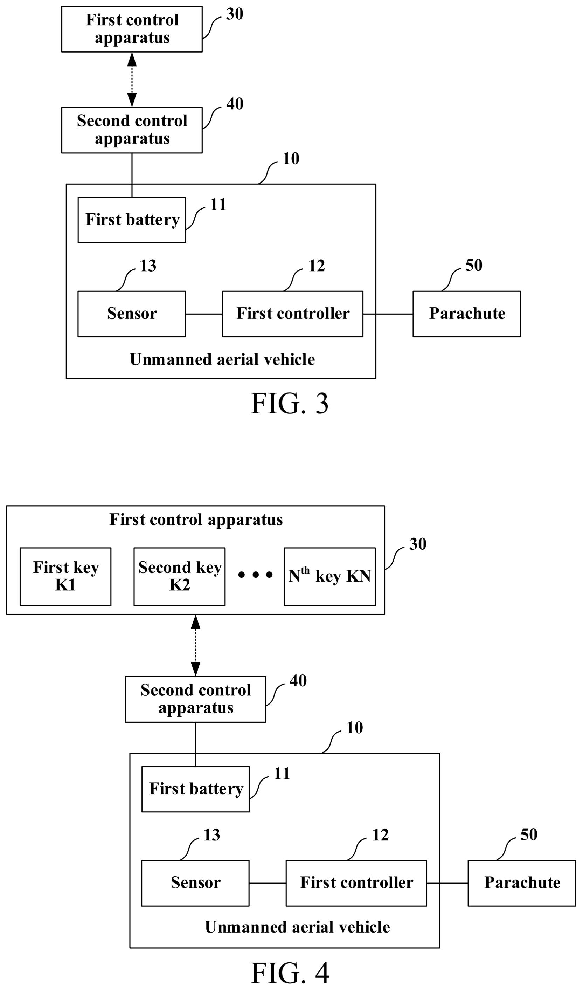

With reference to FIG. 1 and FIG. 3, in some embodiments, the unmanned aerial vehicle system 100 further includes a parachute 50. The unmanned aerial vehicle 10 further includes a first controller 12 and a sensor 13.

The first controller 12 is separately electrically connected to the sensor 13 and the parachute 50. The first controller 12 is configured to control to open the parachute 50 when receiving a detection signal. The detection signal is outputted when the sensor 13 detects that the unmanned aerial vehicle 10 falls.

Specifically, the unmanned aerial vehicle 10 stops operating because power supply is lost after the first battery 11 receives the second control signal and stops outputting the voltage, and the unmanned aerial vehicle 10 falls. In this case, the sensor 13 generates the detection signal and outputs the detection signal to the first controller 12. Then, the first controller 12 controls to open the parachute 50, so that the unmanned aerial vehicle 10 can descend slowly, thereby further protecting the unmanned aerial vehicle 10, to reduce the risk that the unmanned aerial vehicle 10 is damaged, so as to effectively improve the flight safety of the unmanned aerial vehicle 10.

In some embodiments, the sensor 13 includes an acceleration sensor. The acceleration sensor can detect linear accelerations of the unmanned aerial vehicle 10 on three axes (an X axis, a Y axis, and a Z axis). The acceleration on the Z axis may be significantly decreased when the unmanned aerial vehicle 10 suddenly falls, and even a negative value may occur. The acceleration may be used as a sign of falling, and the detection signal is outputted.

It should be noted that, in this embodiment of the present disclosure, an example in which the sensor 13 includes the acceleration sensor is used. In another embodiment, the sensor 13 may alternatively include another sensor or include a plurality of different sensors. For example, in some embodiments, the sensor 13 includes at least one of an acceleration sensor, a gyroscope, a height sensor and an inertial measurement unit. The gyroscope is configured to detect rotation rates of the unmanned aerial vehicle 10 around the three axes. If the unmanned aerial vehicle 10 starts to rapidly roll over or dive, data of the gyroscope may show an abnormal rotation rate, so that it is determined that the unmanned aerial vehicle 10 falls. The height sensor determines a relative height of the unmanned aerial vehicle 10 by measuring an atmospheric pressure. If the height rapidly decreases, it indicates that the unmanned aerial vehicle 10 may fall. The inertial measurement unit integrates the acceleration sensor and the gyroscope, and can provide more precise movement data. Data of the inertial measurement unit may be used to determine an attitude and a movement status of the unmanned aerial vehicle, to detect whether the unmanned aerial vehicle 10 falls. In addition, whether the unmanned aerial vehicle 10 falls may be determined with reference to detection results of different sensors when the sensor 13 includes two or more of the foregoing sensors, to reduce a probability of misjudgment and improve accuracy, so that the risk that the unmanned aerial vehicle 10 is damaged can be further reduced, thereby effectively improving the flight safety of the unmanned aerial vehicle 10.

In some embodiments, as shown in FIG. 4, the first control apparatus 30 further includes N keys, N being an integer greater than or equal to 1. The N keys include a first key K1, a second key K2, ... and an N^{th} key KN.

The first control apparatus 30 is further configured to output the first control signal when M keys of the N keys are pressed, M being an integer greater than or equal to 1 and less than or equal to N. In other words, at least one of the first key K1, the second key K2, ... and the N^{th} key KN may be pressed and used as a condition for triggering the first control apparatus 30 to output the first control signal. For example, in some embodiments, M = N = 2, to be specific, two keys are disposed on the first control apparatus 30. The first control apparatus 30 outputs the first control signal when the two keys are simultaneously pressed. The first control apparatus 30 is set to be triggered to output the first control signal only when a plurality of keys are pressed, to help reduce a probability of false triggering and improve reliability.

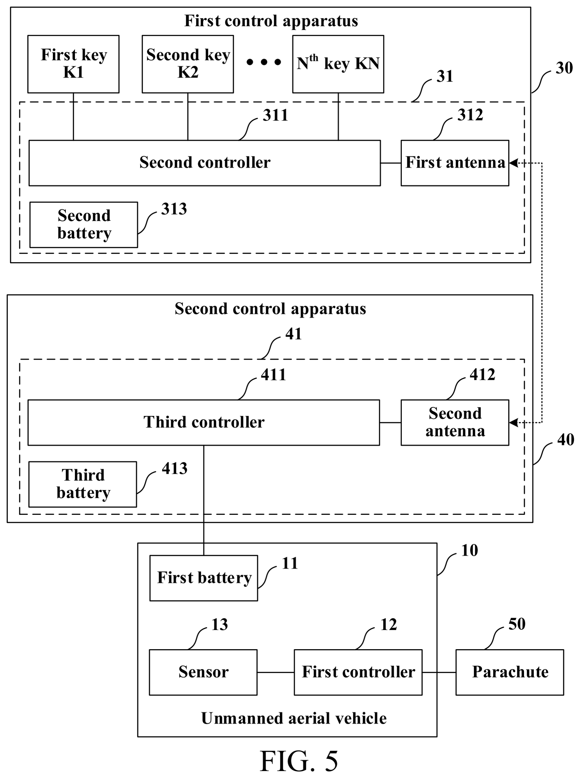

In some embodiments, as shown in FIG. 5, the first control apparatus 30 includes a first communication module 31 and a first housing (not shown in the figure). The second control apparatus 40 includes a second communication module 41 and a second housing (not shown in the figure).

The first communication module 31 is disposed inside the first housing, and the first communication module 31 includes a second controller 311, a first antenna 312 and a second battery 313. The second controller 311 is electrically connected to the first antenna 312. The second communication module 41 is disposed inside the second housing, and the second communication module 41 includes a third controller 411, a second antenna 412 and a third battery 413. The third controller 411 is electrically connected to the second antenna 412.

In this embodiment, both the first control apparatus 30 and the second control apparatus 40 include the corresponding controller, antenna, and battery, so that both the first control apparatus 30 and the second control apparatus 40 can be apparatuses that can independently operate. Therefore, even if the emergency occurs or the flight control fails on the unmanned aerial vehicle 10, the first control apparatus 30 and the second control apparatus 40 are not affected. To be specific, the first control apparatus 30 and the second control apparatus 40 can maintain normal operation of functions of the first control apparatus 30 and the second control apparatus 40, to reliably control the first battery 11 to stop power supply, so as to reliably control to stop operating the unmanned aerial vehicle 10, thereby effectively reducing the risk that the unmanned aerial vehicle 10 is damaged.

In some embodiments, the first control apparatus 30 is further configured to send a first determining signal to the second control apparatus 40, to enable the second control apparatus 40 to determine that the second control apparatus 40 is already connected to the first control apparatus 30. The second control apparatus 40 is further configured to send a second determining signal to the first control apparatus 30, to enable the first control apparatus 30 to determine that the first control apparatus 30 is already connected to the second control apparatus 40. In other words, the first control apparatus 30 and the second control apparatus 40 may send determining signals to each other, to confirm that communication is already established between the first control apparatus 30 and the second control apparatus 40, so as to help subsequently reliably implement data transmission between the first control apparatus 30 and the second control apparatus 40, and help reliably control the first battery 11 to stop power supply, so that the unmanned aerial vehicle 10 is reliably controlled to stop operating, thereby effectively reducing the risk that the unmanned aerial vehicle 10 is damaged.

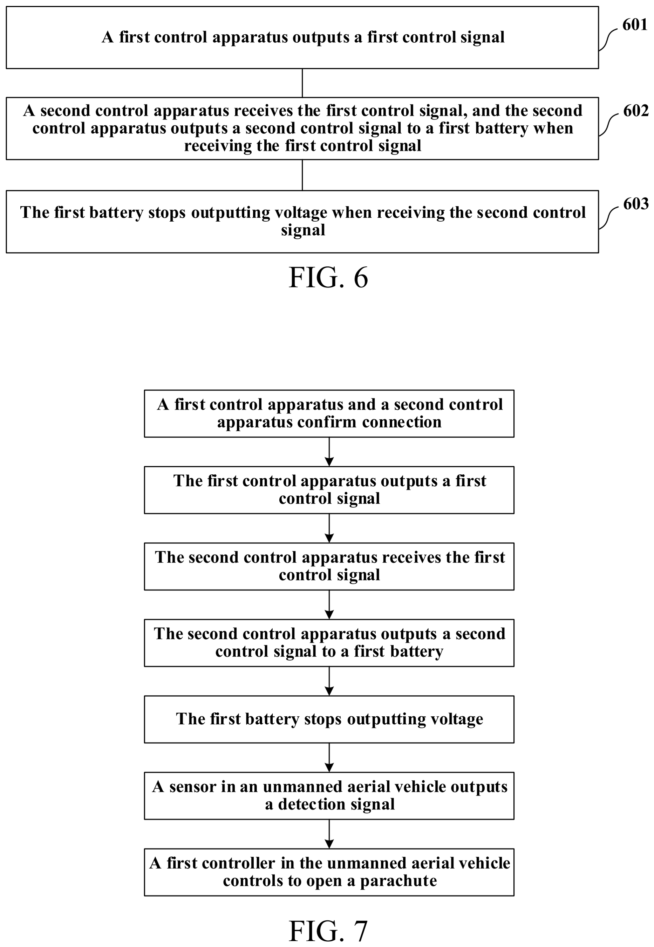

FIG. 6 is a flowchart of a control method based on an unmanned aerial vehicle system according to an embodiment of the present disclosure. The unmanned aerial vehicle system includes an unmanned aerial vehicle, a remote controller, a second control apparatus and a first control apparatus. The first control apparatus is disposed on the remote controller. The second control apparatus is disposed on the unmanned aerial vehicle. The unmanned aerial vehicle includes a first battery. The unmanned aerial vehicle system herein may be implemented by using the structures shown in FIG. 1 to FIG. 5. A specific implementation process is described in detail in the foregoing embodiments, and details are not described herein again. As shown in FIG. 6, the control method based on the unmanned aerial vehicle system includes the following steps:
Step 601: The first control apparatus outputs a first control signal.
Step 602: The second control apparatus receives the first control signal, and the second control apparatus outputs a second control signal to the first battery when receiving the first control signal.
Step 603: The first battery stops outputting voltage when receiving the second control signal.

Specifically, the first control apparatus 30 may output the first control signal to the second control apparatus 40 when an emergency occurs or flight control fails, so that the second control apparatus 40 outputs the second control signal to the first battery 11. Further, the first battery 11 stops outputting the voltage when receiving the second control signal, and the unmanned aerial vehicle 10 stops operating because power supply is lost. Therefore, a risk such as collision with an obstacle due to maintaining operating by the unmanned aerial vehicle 10 when the emergency occurs or the flight control fails is avoided. In other words, a risk that the unmanned aerial vehicle 10 is damaged can be reduced, thereby effectively improving flight safety of the unmanned aerial vehicle 10.

In some embodiments, the unmanned aerial vehicle system further includes a parachute disposed on the unmanned aerial vehicle. The unmanned aerial vehicle further includes a first controller and a sensor. In this case, after step 603 is performed, the control method based on the unmanned aerial vehicle system further includes the following method step: The first controller controls to open the parachute when receiving a detection signal, the detection signal being outputted by the sensor when the sensor detects that the unmanned aerial vehicle falls.

Specifically, the unmanned aerial vehicle 10 stops operating because the power supply is lost after the first battery 11 receives the second control signal and stops outputting the voltage, and the unmanned aerial vehicle 10 falls. In this case, the sensor 13 generates the detection signal and outputs the detection signal to the first controller 12. Then, the first controller 12 controls to open the parachute 50, so that the unmanned aerial vehicle 10 can descend slowly, thereby further protecting the unmanned aerial vehicle 10, to reduce the risk that the unmanned aerial vehicle 10 is damaged, so as to effectively improve the flight safety of the unmanned aerial vehicle 10.

In some embodiments, the first control apparatus further includes N keys, N being an integer greater than or equal to 1. In this case, a specific implementation process in which the first control apparatus outputs the first control signal in step 601 includes the following method step: The first control apparatus outputs the first control signal when M keys of the N keys are pressed, M being an integer greater than or equal to 1 and less than or equal to N.

Specifically, at least one of a first key M1, a second key M2, ... and an M^{th} key KM is pressed and used as a condition for triggering the first control apparatus 30 to output the first control signal. In some implementations, M may be set to be greater than or equal to 2, so that the first control apparatus 30 is set to be triggered to output the first control signal only when a plurality of keys are pressed, to help reduce a probability of false triggering and improve reliability.

In some embodiments, before step 601 is performed, the control method based on the unmanned aerial vehicle system further includes the following method steps: The second control apparatus sends a first determining signal to the second control apparatus, to enable the first control apparatus to determine that the first control apparatus is already connected to the second control apparatus; and the first control apparatus sends a second determining signal to the second control apparatus, to enable the second control apparatus to determine that the second control apparatus is already connected to the first control apparatus.

Specifically, the first control apparatus 30 and the second control apparatus 40 may send determining signals to each other, to confirm that communication is already established between the first control apparatus 30 and the second control apparatus 40, so as to help subsequently reliably implement data transmission between the first control apparatus 30 and the second control apparatus 40, and help reliably control the first battery 11 to stop power supply, so that the unmanned aerial vehicle 10 is reliably controlled to stop operating, thereby effectively reducing the risk that the unmanned aerial vehicle 10 is damaged.

FIG. 7 is a flowchart of a control method based on an unmanned aerial vehicle system according to another embodiment of the present disclosure. As shown in FIG. 7, first, a first control apparatus 30 and a second control apparatus 40 confirm connection, that is, communication is already established between the first control apparatus 30 and the second control apparatus 40. Then, the first control apparatus 30 outputs a first control signal to the second control apparatus 40 when an emergency occurs or flight control fails. The second control apparatus 40 outputs a second control signal to a first battery 11 after receiving the first control signal. Further, the first battery 11 stops outputting voltage when receiving the second control signal. An unmanned aerial vehicle 10 stops operating because power supply is lost, and the unmanned aerial vehicle 10 falls. In this case, a sensor 13 in the unmanned aerial vehicle 10 generates a detection signal and outputs the detection signal to a first controller 12 in the unmanned aerial vehicle 10. Then, the first controller 12 controls to open a parachute 50, so that the unmanned aerial vehicle 10 can descend slowly, thereby further protecting the unmanned aerial vehicle 10, to reduce a risk that the unmanned aerial vehicle 10 is damaged, so as to effectively improving flight safety of the unmanned aerial vehicle 10.

The foregoing descriptions are merely the embodiments of the present disclosure, but are not intended to limit the patent scope of the present disclosure. Any equivalent modifications made to the structures or processes based on the content of the specification and the accompanying drawings of the present disclosure for direct or indirect use in other relevant technical fields shall also fall within the patent protection scope of the present disclosure.

The foregoing embodiments of the present disclosure are merely intended to describe the technical solutions of the present disclosure, but are not intended to limit the present disclosure. Under the concept of the present disclosure, the technical features in the foregoing embodiments or different embodiments can also be combined, and the steps can be implemented in any order. A person of ordinary skill in the art should understand that modifications can still be made to the technical solutions described in the foregoing embodiments, or equivalent replacements can be made to some of the technical features therein. These modifications or replacements do not cause the essence of the corresponding technical solutions to depart from the scope of the technical solutions of the present disclosure.

## Claims

1. A control method based on an unmanned aerial vehicle system, wherein the unmanned aerial vehicle system comprises an unmanned aerial vehicle, a remote controller, a first control apparatus and a second control apparatus, the second control apparatus being disposed on the unmanned aerial vehicle, the first control apparatus being disposed on the remote controller and the unmanned aerial vehicle comprising a first battery, and the method comprises:
outputting, by the first control apparatus, a first control signal;
receiving, by the second control apparatus, the first control signal, and outputting, by the second control apparatus, a second control signal to the first battery when receiving the first control signal; and
stopping, by the first battery, outputting voltage when receiving the second control signal.

2. The method according to claim 1, wherein the unmanned aerial vehicle system further comprises a parachute disposed on the unmanned aerial vehicle, and the unmanned aerial vehicle further comprises a first controller and a sensor; and
after the stopping, by the first battery, outputting voltage when receiving the second control signal, the method further comprises:
controlling, by the first controller, to open the parachute when receiving a detection signal, the detection signal being outputted by the sensor when the sensor detects that the unmanned aerial vehicle falls.

3. The method according to claim 1, wherein the first control apparatus further comprises N keys, N being an integer greater than or equal to 1; and
the outputting, by the first control apparatus, a first control signal comprises:
outputting, by the first control apparatus, the first control signal when M keys of the N keys are pressed, M being an integer greater than or equal to 1 and less than or equal to N.

4. The method according to any of claims 1 to 3, wherein before the outputting, by the first control apparatus, a first control signal, the method further comprises:
sending, by the first control apparatus, a first determining signal to the second control apparatus, to enable the second control apparatus to determine that the second control apparatus is already connected to the first control apparatus; and
sending, by the second control apparatus, a second determining signal to the first control apparatus, to enable the first control apparatus to determine that the first control apparatus is already connected to the second control apparatus.

5. An unmanned aerial vehicle system, comprising:
an unmanned aerial vehicle, a remote controller, a second control apparatus and a first control apparatus, the second control apparatus being disposed on the unmanned aerial vehicle, the first control apparatus being disposed on the remote controller, the unmanned aerial vehicle comprising a first battery and the first battery being electrically connected to the second control apparatus, wherein
the first control apparatus is configured to output a first control signal;
the second control apparatus is configured to receive the first control signal, and configured to output a second control signal to the first battery when receiving the first control signal; and
the first battery is configured to stop outputting the voltage when receiving the second control signal.

6. The unmanned aerial vehicle system according to claim 5, wherein the unmanned aerial vehicle system further comprises a parachute, and the unmanned aerial vehicle further comprises a first controller and a sensor, the first controller being separately electrically connected to the sensor and the parachute; and
the first controller is configured to control to open the parachute when receiving a detection signal, the detection signal being outputted by the sensor when the sensor detects that the unmanned aerial vehicle falls.

7. The unmanned aerial vehicle system according to claim 6, wherein the sensor comprises an acceleration sensor.

8. The unmanned aerial vehicle system according to claim 5, wherein the first control apparatus further comprises N keys, N being an integer greater than or equal to 1; and
the first control apparatus is further configured to output the first control signal when M keys of the N keys are pressed, M being an integer greater than or equal to 1 and less than or equal to N.

9. The unmanned aerial vehicle system according to claim 5, wherein the first control apparatus is further configured to send a first determining signal to the second control apparatus, to enable the second control apparatus to determine that the second control apparatus is already connected to the first control apparatus; and
the second control apparatus is further configured to send a second determining signal to the first control apparatus, to enable the first control apparatus to determine that the first control apparatus is already connected to the second control apparatus.

10. The unmanned aerial vehicle system according to any of claims 5 to 9, wherein the first control apparatus comprises a first communication module and a first housing, and the second control apparatus comprises a second communication module and a second housing;
the first communication module is disposed inside the first housing, and the first communication module comprises a second controller, a first antenna and a second battery, the second controller being electrically connected to the first antenna; and
the second communication module is disposed inside the second housing, and the second communication module comprises a third controller, a second antenna and a third battery, the third controller being electrically connected to the second antenna.
